# EUROPEAN PATENT APPLICATION

(11) **EP 3 492 629 A1**
(43) Date of publication of application: **05.06.2019**
(21) Application number: 17834301.8
(22) Date of filing: 25.07.2017
(51) Int. Cl.: C25B 9/00, C25B 1/04, H02S 10/00, H02S 40/42

(54) **HYDROGEN PURIFICATION SYSTEM**

(30) Priority: 27.07.2016 JP 2016147349
(71) Applicant: Sumitomo Electric Industries, Ltd., Chuo-ku Osaka-shi Osaka 541-0041 (JP)
(72) Inventor: MIKAMI, Rui, Osaka-shi Osaka 554-0024 (JP); IWASAKI, Takashi, Osaka-shi Osaka 554-0024 (JP); INAGAKI, Makoto, Osaka-shi Osaka 554-0024 (JP); NAGAI, Youichi, Osaka-shi Osaka 554-0024 (JP); YAMAMOTO, Seiji, Osaka-shi Osaka 554-0024 (JP)
(74) Representative: Boult Wade Tennant LLP
(86) International application number: PCT/JP2017/026839
(87) International publication number: WO 2018/021295

(57) **Abstract**

A hydrogen generation system according to one aspect of the present disclosure comprises: a concentrator photovoltaic module including: a casing including a frame, and a bottom plate provided at the lower end of the frame, and a concentrator photovoltaic element disposed on the bottom plate; a hydrogen generation apparatus configured to generate hydrogen by electrolyzing water with electric power supplied from the concentrator photovoltaic module; and a heat exhauster mechanism configured to raise the temperature of the water using heat generated in the concentrator photovoltaic module.

## Description

### TECHNICAL FIELD

The present disclosure relates to a hydrogen generation system. The present application claims a priority based on Japanese Patent Application No. 2016-147349 filed on July 27, 2016, the entire contents of which are incorporated herein by reference.

### BACKGROUND ART

As described in Japanese Patent Laying-Open No. 2012-94684 (PTL 1), a system having a combination of a concentrator photovoltaic module and a hydrogen generation apparatus have conventionally been known.

The system described in PTL 1 includes a concentrator photovoltaic module, and a hydrogen generation apparatus that electrolyzes water with electric power supplied from the concentrator photovoltaic module and generates hydrogen.

### CITATION LIST

### PATENT LITERATURE

PTL 1: Japanese Patent Laying-Open No. 2012-94684

### SUMMARY OF INVENTION

A hydrogen generation system according to one aspect of the present disclosure comprises: a concentrator photovoltaic module including: a casing including a frame, and a bottom plate provided at the lower end of the frame, and a concentrator photovoltaic element disposed on the bottom plate; a hydrogen generation apparatus configured to generate hydrogen by electrolyzing water with electric power supplied from the concentrator photovoltaic module; and a heat exhauster mechanism configured to raise the temperature of the water using heat generated in the concentrator photovoltaic module.

### BRIEF DESCRIPTION OF DRAWINGS

Fig. 1 is a schematic diagram showing the general configuration of a hydrogen generation system according to a first embodiment.
Fig. 2 is a top view of a concentrator photovoltaic apparatus 1.
Fig. 3 is an enlarged cross-sectional view of a concentrator photovoltaic module 11.
Fig. 4 is a schematic diagram showing the configuration of a hydrogen generation apparatus 2.
Fig. 5 is a schematic diagram showing the general configuration of a variation of the hydrogen generation system according to the first embodiment.
Fig. 6 is a schematic diagram showing the general configuration of a hydrogen generation system according to a second embodiment.
Fig. 7 is an enlarged cross-sectional view of concentrator photovoltaic module 11 in the hydrogen generation system according to the second embodiment.
Fig. 8 is a schematic diagram showing the general configuration of a hydrogen generation system according to a third embodiment.
Fig. 9 is an enlarged cross-sectional view of concentrator photovoltaic module 11 in the hydrogen generation system according to the third embodiment.
Fig. 10 is a schematic diagram showing the general configuration of a hydrogen generation system according to a fourth embodiment.
Fig. 11 is a schematic top view of a tracking control board 43.
Fig. 12 is a circuit diagram of a voltage conversion unit 5.
Fig. 13 is a schematic top view of voltage conversion unit 5.

### DETAILED DESCRIPTION

### [Problem to be Solved by the Present Disclosure]

A concentrator photovoltaic element included in a concentrator photovoltaic module has a lower power generation efficiency as the temperature rises. When the outside air temperature is high, the heat generated in the concentrator photovoltaic module is not sufficiently dissipated. This causes a temperature rise of the concentrator photovoltaic element, thus lowering the power generation efficiency of the concentrator photovoltaic module.

It is known that, when water to be electrolyzed has a lower temperature, a hydrogen generation apparatus has a lower efficiency in hydrogen generation. Therefore, when the outside air temperature is low, the hydrogen generation apparatus has a low efficiency in hydrogen generation. Thus, the system described in PTL 1 cannot operate efficiently whether the outside air temperature is high or low.

The present disclosure has been made in view of such problems of the prior art. Specifically, the present disclosure provides a hydrogen generation system that can generate hydrogen efficiently regardless of the outside air temperature.

### [Advantageous Effect of the Present Disclosure]

According the above, it is possible to generate hydrogen efficiently regardless of the outside air temperature.

### [Description of Embodiments of the Present Disclosure]

First, embodiments of the present disclosure are enumerated.
(1) A hydrogen generation system according to one aspect of the present disclosure comprises: a concentrator photovoltaic module including: a casing including a frame, and a bottom plate provided at the lower end of the frame, and a concentrator photovoltaic element disposed on the bottom plate; a hydrogen generation apparatus configured to generate hydrogen by electrolyzing water with electric power supplied from the concentrator photovoltaic module; and a heat exhauster mechanism configured to raise the temperature of the water using heat generated in the concentrator photovoltaic module.
   The hydrogen generation system of (1) can generate hydrogen efficiently regardless of the outside air temperature.
(2) In the hydrogen generation system of (1), the heat exhauster mechanism may include: a heat exchanger, and a flow path provided in the bottom plate and connected to the heat exchanger, so that coolant flows in the flow path. The heat exchanger may raise the temperature of the water through the coolant.
   The hydrogen generation system of (2) can prevent the water from polluting the flow path in the heat exhauster mechanism.
(3) In the hydrogen generation system of (1), the heat exhauster mechanism may include a flow path provided in the bottom plate, so that the water flows in the flow path.
   The hydrogen generation system of (3) can raise the temperature of the water without using a heat exchanger. That is, the system configuration can be simplified.
(4) In the hydrogen generation system of (2) or (3), the flow path may be disposed under the concentrator photovoltaic element.
   The hydrogen generation system of (4) can cool the concentrator photovoltaic element efficiently.
(5) In the hydrogen generation system of (1), the heat exhauster mechanism may include: a heat exchanger, and a flow path provided on the bottom plate and connected to the heat exchanger, so that coolant flows in the flow path. The heat exchanger may raise the temperature of the water through the coolant. The concentrator photovoltaic element may be disposed over the flow path.
   The hydrogen generation system of (5) can cool the concentrator photovoltaic element efficiently.
(6) In the hydrogen generation system of (5), the frame and the bottom plate may be integrally formed of a resin material.
   The hydrogen generation system of (6) allows easy manufacture of the concentrator photovoltaic module and can reduce the weight of the concentrator photovoltaic module.
(7) In the hydrogen generation system of (5) or (6), the flow path and the concentrator photovoltaic element may be electrically connected to each other.
   The hydrogen generation system of (7) eliminates the need for providing separate wiring for connecting the concentrator photovoltaic element.
(8) The hydrogen generation system of (2) to (7) may further comprise a tracking control board configured to control the concentrator photovoltaic module to track the sun, the tracking control board including a first pipe in the tracking control board. The first pipe may be connected to the flow path.
   The hydrogen generation system of (8) can use the heat exhaust from the system more efficiently.
(9) The hydrogen generation system of (2) to (8) may further comprise a voltage conversion unit configured to convert a voltage supplied from the concentrator photovoltaic module, the voltage conversion unit including a second pipe in the voltage conversion unit. The second pipe may be connected to the flow path.

The hydrogen generation system of (9) can use the heat exhaust from the system more efficiently.

### [Details of Embodiments of the Present Disclosure]

The details of embodiments of the present disclosure are hereinafter described with reference to the drawings. In the drawings, identical or corresponding parts are identically denoted. The embodiments hereinafter described may be combined at least partially in any way.

### (First Embodiment)

The configuration of a hydrogen generation system according to the first embodiment is hereinafter described.

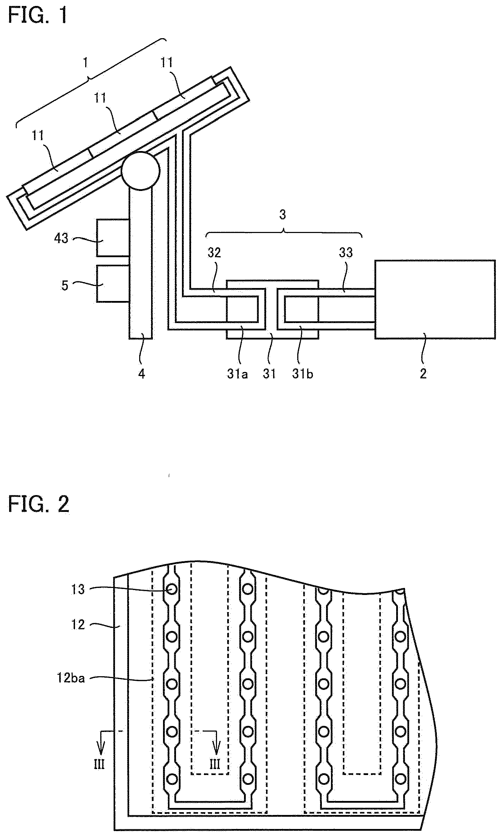

Fig. 1 is a schematic diagram showing the general configuration of the hydrogen generation system according to the first embodiment. As shown in Fig. 1, the hydrogen generation system according to the first embodiment includes a concentrator photovoltaic apparatus 1, a hydrogen generation apparatus 2, and a heat exhauster mechanism 3. Concentrator photovoltaic apparatus 1 includes a plurality of concentrator photovoltaic modules 11.

Concentrator photovoltaic apparatus 1 is attached to a stand 4. Stand 4 includes a driver 41 (not shown), a solar azimuth sensor 42 (not shown), and a tracking control board 43.

Driver 41 changes the orientation of the light receiving surface of concentrator photovoltaic apparatus 1. Specifically, driver 41 includes a power source, such as an electric motor. Solar azimuth sensor 42 outputs a signal representing the direction of the sun. Specifically, solar azimuth sensor 42 includes a sensor for detecting the direction of the sun. Tracking control board 43 controls driver 41 based on the signal from solar azimuth sensor 42. Specifically, tracking control board 43 controls the power source, such as an electric motor, included in driver 41 so that the light receiving surface faces toward the sun.

Fig. 2 is a top view of concentrator photovoltaic apparatus 1. As shown in Fig. 2, each concentrator photovoltaic module 11 includes a casing 12 and concentrator photovoltaic elements 13. A plurality of concentrator photovoltaic elements 13 are arranged in each concentrator photovoltaic module 11. A plurality of concentrator photovoltaic elements 13 are arranged in a matrix.

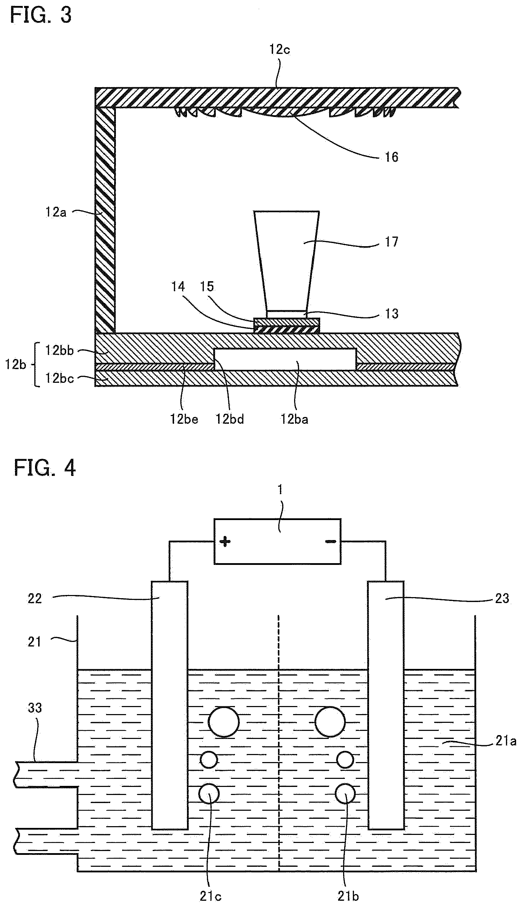

Fig. 3 is an enlarged cross-sectional view of concentrator photovoltaic module 11. As shown in Fig. 3, casing 12 includes a frame 12a, a bottom plate 12b, and a top plate 12c. Frame 12a forms the side wall of casing 12. Frame 12a is made of, for example, a resin material. The resin material for frame 12a is, for example, polybutylene terephthalate (PBT) with glass fiber contained.

Bottom plate 12b forms the bottom face of casing 12. Bottom plate 12b is provided at the lower end of frame 12a. Bottom plate 12b includes a flow path 12ba therein. Specifically, bottom plate 12b has an upper bottom plate 12bb and a lower bottom plate 12bc. Upper bottom plate 12bb has a groove 12bd. Upper bottom plate 12bb is arranged so that its surface having groove 12bd aligns with lower bottom plate 12bc. Upper bottom plate 12bb and lower bottom plate 12bc are bonded to each other with a brazing material 12be. Thus, flow path 12ba is formed in bottom plate 12b. Flow path 12ba constitutes a part of heat exhauster mechanism 3. Coolant flows in flow path 12ba. The coolant is a liquid or a gas.

Bottom plate 12b is made of a material higher in thermal conductivity than frame 12a. For example, if frame 12a is made of a resin material, bottom plate 12b is made of metallic material. The metallic material for bottom plate 12b is, for example, copper (Cu) or aluminum (Al).

Concentrator photovoltaic element 13 is provided over bottom plate 12b. Between bottom plate 12b and concentrator photovoltaic element 13, an insulating material 14 and a wiring material 15 are provided. Insulating material 14 is provided on bottom plate 12b. Wiring material 15 is provided on insulating material 14. Wiring material 15 is electrically connected to concentrator photovoltaic element 13. Insulating material 14 is made of, for example, polyimide. Wiring material 15 is made of, for example, Cu. Insulating material 14 and wiring material 15 constitute, for example, a flexible printed circuit (FPC) board.

As shown in Fig. 2 and Fig. 3, concentrator photovoltaic element 13 is preferably disposed over flow path 12ba. That is, concentrator photovoltaic element 13 preferably coincides in position with flow path 12ba in plan view (as seen from the direction orthogonal to bottom plate 12b).

As shown in Fig. 3, top plate 12c forms the top face of casing 12. Top plate 12c is provided at the upper end of frame 12a. The upper end of frame 12a is the end opposite to the lower end of frame 12a at which bottom plate 12b is disposed.

A primary optical system 16 is provided at top plate 12c. Primary optical system 16 is, for example, a Fresnel lens. A secondary optical system 17 is provided on concentrator photovoltaic element 13. Secondary optical system 17 is, for example, a rod lens. Secondary optical system 17 may be a sphere lens or the like. The sunlight is condensed by primary optical system 16 and enters secondary optical system 17. The sunlight that has entered secondary optical system 17 is transmitted to concentrator photovoltaic element 13.

Concentrator photovoltaic element 13 generates electric power by receiving the transmitted sunlight. The electric power generated by concentrator photovoltaic element 13 is supplied to hydrogen generation apparatus 2. As shown in Fig. 1, the hydrogen generation system according to the first embodiment may include voltage conversion unit 5. Voltage conversion unit 5 is, for example, a DCDC converter. Voltage conversion unit 5 performs voltage conversion for the electric power supplied from concentrator photovoltaic apparatus 1.

Fig. 4 is a schematic diagram showing the configuration of hydrogen generation apparatus 2. As shown in Fig. 4, hydrogen generation apparatus 2 includes a storage tank 21, an anode 22, a cathode 23, and a partition 24. Storage tank 21 has a pipe 33 connected thereto. Storage tank 21 stores water 21a to be electrolyzed. An additive, such as sodium hydroxide, is added to water 21a for facilitating the electrolysis. The additive in water 21a may be sodium carbonate, sodium sulfate, potassium hydroxide or the like. Water 21a, however, may be pure water, for example.

Anode 22 and cathode 23 are connected to concentrator photovoltaic apparatus 1 (or voltage conversion unit 5). Anode 22 and cathode 23 electrolyze water 21a with electric power supplied from concentrator photovoltaic apparatus 1. As a result, hydrogen 21b is generated at anode 22, and oxygen 21c is generated at cathode 23.

Heat exhauster mechanism 3 raises the temperature of water 21a stored in hydrogen generation apparatus 2 using the heat generated in photovoltaic module 11. Specifically, as shown in Fig. 1, heat exhauster mechanism 3 includes a flow path 12ba (not shown in Fig. 1), a heat exchanger 31, a pipe 32, and a pipe 33.

Heat exchanger 31 includes an inlet-side pipe 31a and an outlet-side pipe 31b. Inlet-side pipe 31a is connected to flow path 12ba. Inlet-side pipe 31a and flow path 12ba are connected to each other via pipe 32. Outlet-side pipe 31b is connected to storage tank 21 of hydrogen generation apparatus 2. Outlet-side pipe 31b and storage tank 21 are connected to each other via pipe 33. Heat exchanger 31 exchanges heat between the coolant flowing through inlet-side pipe 31a and water 21a flowing through outlet-side pipe 31b. Thus, heat exhauster mechanism 3 raises the temperature of water 21a using the heat generated in photovoltaic module 11.

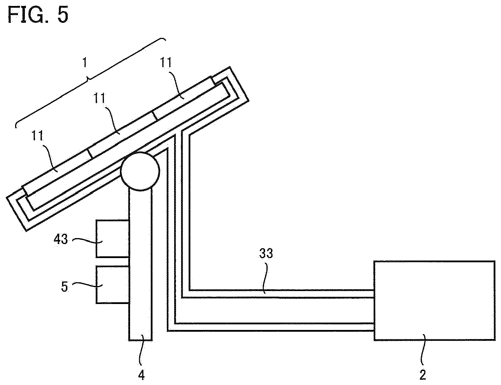

Fig. 5 is a schematic diagram showing the general configuration of a variation of the hydrogen generation system according to the first embodiment. As shown in Fig. 5, heat exhauster mechanism 3 includes flow path 12ba and pipe 33 but does not include heat exchanger 31. Flow path 12ba is connected to pipe 33. In this case, when water 21a passes through flow path 12ba, the temperature of water 21a is raised by the heat generated in photovoltaic module 11. Such a configuration may be used for heat exhauster mechanism 3 to raise the temperature of water 21a using the heat generated in concentrator photovoltaic module 11.

The advantageous effects of the hydrogen generation system according to the first embodiment are hereinafter described.

In the hydrogen generation system according to the first embodiment, heat exhauster mechanism 3 cools concentrator photovoltaic module 11 and raises the temperature of water 21a stored in hydrogen generation apparatus 2 using the heat generated in concentrator photovoltaic module 11. Therefore, the hydrogen generation system according to the first embodiment improves the efficiency of concentrator photovoltaic module 11 and hydrogen generation apparatus 2 regardless of the outside air temperature.

In the hydrogen generation system according to the first embodiment, if heat exhauster mechanism 3 includes heat exchanger 31, water 21a stored in hydrogen generation apparatus 2 does not flow into flow path 12ba in concentrator photovoltaic module 11. Therefore, flow path 12ba can be prevented from being corroded by an additive in water 21a.

In the hydrogen generation system according to the first embodiment, if heat exhauster mechanism 3 includes flow path 12ba and pipe 33 but does not include heat exchanger 31, the temperature of water 21a is raised by the heat generated in concentrator photovoltaic module 11. In this case, therefore, the temperature of water 21a in hydrogen generation apparatus 2 can be raised more efficiently. Further, in this case, the configuration of the hydrogen generation system can be simplified.

In the hydrogen generation system according to the first embodiment, if flow path 12ba coincides in position with concentrator photovoltaic element 13 in plan view, the heat generated in concentrator photovoltaic module 12 can be efficiently transferred to heat exhauster mechanism 3. In this case, therefore, the efficiency of the hydrogen generation system is further improved.

### (Second Embodiment)

The configuration of a hydrogen generation system according to the second embodiment is hereinafter described.

The following mainly describes the differences from the hydrogen generation system according to the first embodiment, and the redundant description will not be repeated.

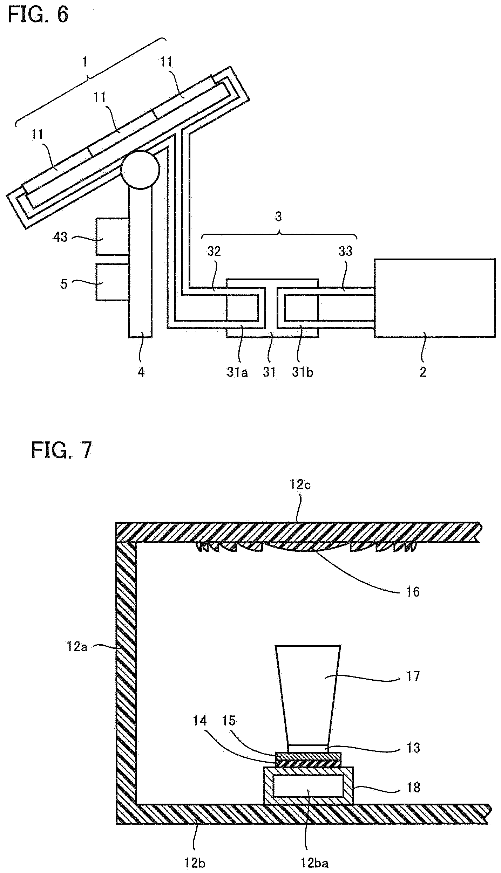

Fig. 6 is a schematic diagram showing the general configuration of a hydrogen generation system according to the second embodiment. As shown in Fig. 6, the hydrogen generation system according to the second embodiment includes concentrator photovoltaic apparatus 1, hydrogen generation apparatus 2, and heat exhauster mechanism 3. Concentrator photovoltaic apparatus 1 is attached to stand 4, and stand 4 includes driver 41 (not shown), solar azimuth sensor 42 (not shown), and tracking control board 43. Between concentrator photovoltaic apparatus 1 and hydrogen generation apparatus 2, voltage conversion unit 5 is provided.

Heat exhauster mechanism 3 includes flow path 12ba (see Fig. 7), heat exchanger 31, pipe 32, and pipe 33. Heat exhauster mechanism 3 may only include flow path 12ba and pipe 33, but without heat exchanger 31.

Fig. 7 is an enlarged cross-sectional view of concentrator photovoltaic module 11 in the hydrogen generation system according to the second embodiment. As shown in Fig. 7, casing 12 includes frame 12a, bottom plate 12b, and top plate 12c. Frame 12a and bottom plate 12b are preferably made of the same material. Frame 12a and bottom plate 12b are preferably made of a resin material. Frame 12a and bottom plate 12b are preferably integrally formed.

On bottom plate 12b, flow path 12ba is provided. Specifically, flow path 12ba is defined by a tubular member 18. Tubular member 18 is provided on bottom plate 12b. Tubular member 18 is made of Al, Cu or the like. Flow path 12ba is connected to heat exchanger 31 via pipe 32. Heat exchanger 31 is connected to storage tank 21 of hydrogen generation apparatus 2 via pipe 32. If heat exhauster mechanism 3 does not include heat exchanger 31, flow path 12ba is connected to storage tank 21 of hydrogen generation apparatus 2 via pipe 33.

Concentrator photovoltaic element 13 is provided over tubular member 18. Between concentrator photovoltaic element 13 and tubular member 18, insulating material 14 and wiring material 15 are provided. Insulating material 14 is provided on tubular member 18. Wiring material 15 is provided on insulating material 14. Concentrator photovoltaic element 13 is electrically connected to wiring material 15.

The advantageous effects of the hydrogen generation system according to the second embodiment are hereinafter described.

The hydrogen generation system according to the second embodiment provides an improved efficiency of the hydrogen generation system regardless of the outside air temperature.

In the hydrogen generation system according to the second embodiment, flow path 12ba provided on bottom plate 12b exhausts the heat from concentrator photovoltaic module 11. It is therefore not necessary for bottom plate 12b to be made of a high-thermal-conductivity material. Bottom plate 12b may be made of the same material as frame 12a, i.e., a resin material, and they can be integrally formed. If bottom plate 12b and frame 12a are integrally formed of a resin material, the concentrator photovoltaic module can be manufactured in a simplified process and can be reduced in weight.

### (Third Embodiment)

The configuration of a hydrogen generation system according to the third embodiment is hereinafter described.

The following describes the differences from the hydrogen generation system according to the second embodiment, and the redundant description will not be repeated.

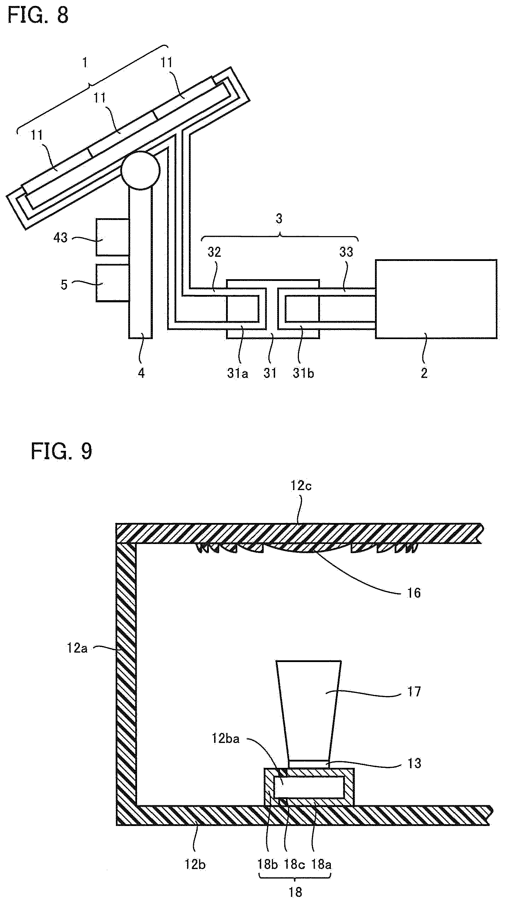

Fig. 8 is a schematic diagram showing the general configuration of the hydrogen generation system according to the third embodiment. As shown in Fig. 8, the hydrogen generation system according to the third embodiment includes concentrator photovoltaic apparatus 1, hydrogen generation apparatus 2, and heat exhauster mechanism 3. Concentrator photovoltaic apparatus 1 is attached to stand 4, and stand 4 includes driver 41 (not shown), solar azimuth sensor 42 (not shown), and tracking control board 43. Between concentrator photovoltaic apparatus 1 and hydrogen generation apparatus 2, voltage conversion unit 5 is provided.

Heat exhauster mechanism 3 includes flow path 12ba (see Fig. 9), heat exchanger 31, pipe 32, and pipe 33. Heat exhauster mechanism 3 may only include flow path 12ba and pipe 33, but without heat exchanger 31.

Fig. 9 is an enlarged cross-sectional view of concentrator photovoltaic module 11 in the hydrogen generation system according to the third embodiment. As shown in Fig. 9, casing 12 includes frame 12a, bottom plate 12b, and top plate 12c. Frame 12a and bottom plate 12b are preferably made of the same material. Frame 12a and bottom plate 12b are preferably made of a resin material. Frame 12a and bottom plate 12b are preferably integrally formed.

On bottom plate 12b, flow path 12ba is provided. Specifically, flow path 12ba is defined by tubular member 18. Tubular member 18 is provided on bottom plate 12b. Tubular member 18 is made of Al, Cu or the like. Flow path 12ba is connected to heat exchanger 31 by connecting tubular member 18 and pipe 32 to each other. Heat exchanger 31 is connected to storage tank 21 of hydrogen generation apparatus 2 by connecting to pipe 32. In this case, pipe 32 is made of an insulating material for insulation. If heat exhauster mechanism 3 does not include heat exchanger 31, flow path 12ba is connected to storage tank 21 of hydrogen generation apparatus 2 by connecting tubular member 18 and pipe 33 to each other. In this case, pipe 33 is made of an insulating material for insulation.

Tubular member 18 is divided into a first portion 18a and a second portion 18b. One side of tubular member 18 in the extending direction is first portion 18a, and the other side of tubular member 18 in the extending direction is second portion 18b. An insulating portion 18c is interposed between first portion 18a and second portion 18b. Insulating portion 18c is made of, for example, butyl rubber.

Concentrator photovoltaic element 13 is provided on tubular member 18. Concentrator photovoltaic element 13 is electrically connected to tubular member 18. For example, the anode of concentrator photovoltaic element 13 is electrically connected to first portion 18a, and the cathode of concentrator photovoltaic element 13 is electrically connected to second portion 18b. Between concentrator photovoltaic element 13 and tubular member 18, insulating material 14 and wiring material 15 are not provided. In other words, concentrator photovoltaic element 13 is provided directly on tubular member 18.

The advantageous effects of the hydrogen generation system according to the third embodiment are hereinafter described.

The hydrogen generation system according to the second embodiment provides an improved efficiency of the hydrogen generation system regardless of the outside air temperature.

Further, the hydrogen generation system according to the third embodiment eliminates the need for insulating material 14 and wiring material 15. Therefore, the hydrogen generation system according to the third embodiment can reduce the manufacturing cost. Further, since insulating material 14 is not provided between concentrator photovoltaic element 13 and tubular member 18 in the hydrogen generation system according to the third embodiment, the heat generated from concentrator photovoltaic element 13 can be exhausted more efficiently.

### (Fourth Embodiment)

The configuration of a hydrogen generation system according to the fourth embodiment is hereinafter described.

The following describes the differences from the hydrogen generation systems according to the first to third embodiments, and the redundant description will not be repeated.

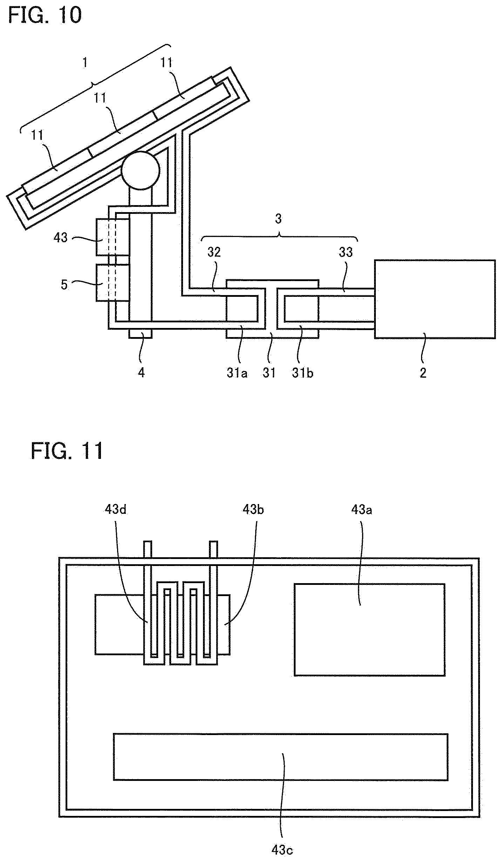

Fig. 10 is a schematic diagram showing the general configuration of the hydrogen generation system according to the fourth embodiment. As shown in Fig. 10, the hydrogen generation system according to the second embodiment includes concentrator photovoltaic apparatus 1, hydrogen generation apparatus 2, and heat exhauster mechanism 3. Heat exhauster mechanism 3 includes flow path 12ba (not shown), pipe 32 connected to flow path 12ba, heat exchanger 31 connected to pipe 32, and pipe 33 connected to heat exchanger 31. Heat exhauster mechanism 3 may only include flow path 12ba (not shown) and pipe 33 connected to flow path 12ba, but without pipe 32 and heat exchanger 31.

Concentrator photovoltaic apparatus 1 is attached to stand 4, and stand 4 includes driver 41 (not shown), solar azimuth sensor 42 (not shown), and tracking control board 43. Between concentrator photovoltaic apparatus 1 and hydrogen generation apparatus 2, voltage conversion unit 5 is provided.

Fig. 11 is a schematic top view of tracking control board 43. As shown in Fig. 11, tracking control board 43 includes a control unit 43a, a power supply unit 43b, a terminal unit 43c, and a first pipe 43d. Control unit 43a is a part to control driver 41 based on the signal from solar azimuth sensor 42. Power supply unit 43b is a part to convert AC power supply into DC power supply for control, for example. Terminal unit 43c is a part having various types of terminals for connecting to external elements.

First pipe 43d is provided in tracking control board 43. In tracking control board 43, power supply unit 43b generates the largest amount of heat. Therefore, first pipe 43d is provided preferably around power supply unit 43b. Specifically, first pipe 43d is provided preferably on the casing of power supply unit 43b. First pipe 43d is made of Al, Cu or the like.

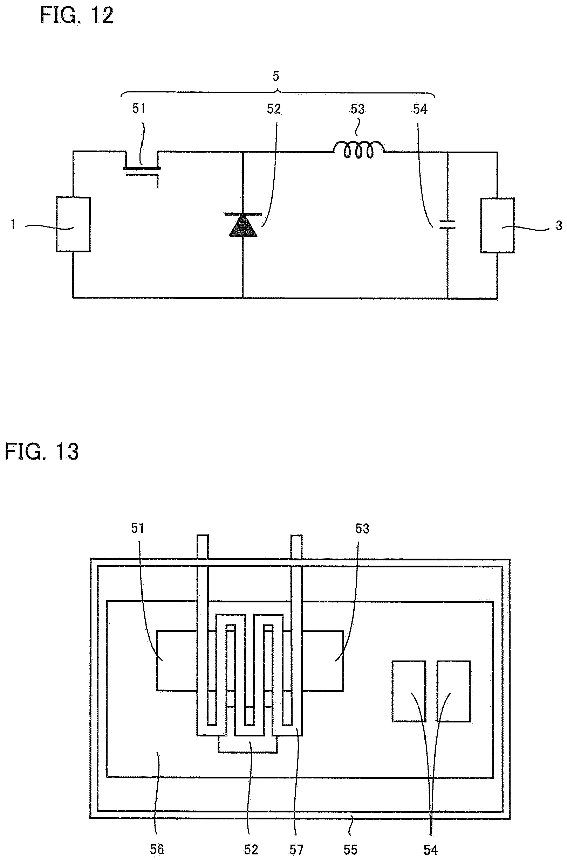

As described above, voltage conversion unit 5 is, for example, a DCDC converter. Fig. 12 is a circuit diagram of voltage conversion unit 5. As shown in Fig. 12, voltage conversion unit 5 includes a switching element 51, a diode 52, a coil element 53, and a capacitor element 54. Switching element 51 is, for example, a power metal oxide semiconductor field effect transistor (MOSFET).

Fig. 13 is a schematic top view of voltage conversion unit 5. As shown in Fig. 13, voltage conversion unit 5 includes a casing 55, a substrate 56, and a second pipe 57. Switching element 51, diode 52, coil element 53, and capacitor element 54 are mounted on substrate 56. Substrate 56 is contained in casing 55. Second pipe 57 is provided in casing 55.

Switching element 51, diode 52, and coil element 53 generate a large amount of heat in voltage conversion unit 5. Therefore, second pipe 57 is provided preferably around switching element 51, diode 52, and coil element 53. Second pipe 57 is made of Al, Cu or the like.

First pipe 43d and second pipe 57 are connected to flow path 12ba. Specifically, first pipe 43d and second pipe 57 are disposed on the path of pipe 32. If heat exhauster mechanism 3 does not include pipe 32 and heat exchanger 31, first pipe 43d and second pipe 57 are disposed on the path of pipe 33 and thus connected to flow path 12ba.

The advantageous effects of the hydrogen generation system according to the fourth embodiment are hereinafter described.

The hydrogen generation system according to the fourth embodiment can raise the temperature of water 21a in hydrogen generation apparatus 2 using not only the heat generated in concentrator photovoltaic module 11 but also the heat generated in tracking control board 43 and voltage conversion unit 5. Therefore, the hydrogen generation system according to the fourth embodiment can use the exhaust heat from the hydrogen generation system more efficiently.

The embodiments disclosed herein should be construed as being by way of illustration in every respect, not by way of limitation. The scope of the present invention is defined not by the above-described embodiments but by the terms of the claims. It is intended that the scope of the present invention includes any modification within the meaning and the scope equivalent to the terms of the claims.

### REFERENCE SIGNS LIST

1: concentrator photovoltaic apparatus; 2: hydrogen generation apparatus; 3: heat exhauster mechanism; 4: stand; 5: voltage conversion unit; 11: concentrator photovoltaic module; 12: casing; 12a: frame; 12b: bottom plate; 12ba: flow path; 12bb: upper bottom plate; 12bc: lower bottom plate; 12bd: groove; 12be: brazing material; 12c: top plate; 13: concentrator photovoltaic element; 14: insulating material; 15: wiring material; 16: primary optical system; 17:secondary optical system; 18: tubular member; 18a: first portion; 18b: second portion; 18c: insulating portion; 21: storage tank; 21a: water 21b: hydrogen; 21c: oxygen; 22: anode; 23: cathode; 24: partition; 31: heat exchanger; 31a: inlet-side pipe; 31b: outlet-side pipe; 32, 33: pipe; 41: driver; 42: solar azimuth sensor; 43: tracking control board; 43a: control unit; 43b: power supply unit; 43c: terminal unit; 43d: first pipe; 51: switching element; 52: diode; 53: coil element; 54: capacitor element; 55: casing; 56: substrate; 57: second pipe

## Claims

1. A hydrogen generation system comprising:
a concentrator photovoltaic module including:
a casing including a frame, and a bottom plate provided at a lower end of the frame, and
a concentrator photovoltaic element disposed on the bottom plate;
a hydrogen generation apparatus configured to generate hydrogen by electrolyzing water with electric power supplied from the concentrator photovoltaic module; and
a heat exhauster mechanism configured to raise a temperature of the water using heat generated in the concentrator photovoltaic module.

2. The hydrogen generation system according to claim 1, wherein
the heat exhauster mechanism includes:
a heat exchanger, and
a flow path provided in the bottom plate and connected to the heat exchanger, so that coolant flows in the flow path, and
the heat exchanger raises the temperature of the water through the coolant.

3. The hydrogen generation system according to claim 1, wherein the heat exhauster mechanism includes a flow path provided in the bottom plate, so that the water flows in the flow path.

4. The hydrogen generation system according to claim 2 or 3, wherein the flow path is disposed under the concentrator photovoltaic element.

5. The hydrogen generation system according to claim 1, wherein
the heat exhauster mechanism includes:
a heat exchanger, and
a flow path provided on the bottom plate and connected to the heat exchanger, so that coolant flows in the flow path,
the heat exchanger raises the temperature of the water through the coolant, and
the concentrator photovoltaic element is disposed over the flow path.

6. The hydrogen generation system according to claim 5, wherein the frame and the bottom plate are integrally formed of a resin material.

7. The hydrogen generation system according to claim 5 or 6, wherein
the flow path is made of an electrically conductive material, and
the flow path and the concentrator photovoltaic element are electrically connected to each other.

8. The hydrogen generation system according to any one of claims 2 to 7, further comprising a tracking control board configured to control the concentrator photovoltaic module to track the sun, the tracking control board including a first pipe in the tracking control board, wherein
the first pipe is connected to the flow path.

9. The hydrogen generation system according to any one of claims 2 to 8, further comprising a voltage conversion unit configured to convert a voltage supplied from the concentrator photovoltaic module, the voltage conversion unit including a second pipe in the voltage conversion unit, wherein
the second pipe is connected to the flow path.
